# EUROPEAN PATENT APPLICATION

(11) **EP 4 730 216 A1**
(43) Date of publication of application: **22.04.2026**
(21) Application number: 24219553.5
(22) Date of filing: 12.12.2024
(51) Int. Cl.: G06N 10/80, G06N 10/20, G06N 10/70

(54) **INTELLIGENT QUANTUM CIRCUIT SCHEDULER WITH STATIC CODE ANALYSIS FOR TARGET EXECUTION SUITABILITY**

(30) Priority: 18.10.2024 US 202418920319
(71) Applicant: Red Hat, LLC, Raleigh, NC 27601 (US)
(72) Inventor: GRIFFIN, Leigh, Raleigh, 27601 (US); COADY, Stephen, Raleigh, 27601 (US)
(74) Representative: Murgitroyd & Company

(57) **Abstract**

A quantum system can obtain a quantum instruction set. The quantum system can classify a quantum algorithm type of the quantum instruction set. The quantum system can evaluate an optimization factor of the quantum instruction set based on the quantum algorithm type. The quantum system can rank a plurality of candidate quantum computing systems based on the optimization factor and metadata associated with the plurality of candidate quantum computing systems. The metadata can be descriptive of performance characteristics of the plurality of candidate quantum computing systems respective to the optimization factor. The quantum system can schedule the quantum instruction set on a selected quantum computing system of the plurality of candidate quantum computing systems based on ranking the plurality of candidate quantum computing systems.

## Description

### TECHNICAL FIELD

The present disclosure relates generally to software technology, and more particularly, to quantum computing systems and methods.

### BACKGROUND

Quantum computing involves the use of quantum bits, referred to herein as "qubits," which have characteristics that differ from those of classical (i.e., non-quantum) bits used in classical computing. Qubits may be employed by quantum services that are executed by quantum computing devices.

### SUMMARY

The present disclosure is directed to scheduling a quantum instruction set on a selected quantum computing system of a plurality of candidate quantum computing systems based on an optimization factor associated with the quantum instruction set and metadata descriptive of performance characteristics of the candidate quantum computing systems.

According to a first aspect of the present disclosure there is provided a method, comprising: obtaining a quantum instruction set; classifying a quantum algorithm type of the quantum instruction set; evaluating an optimization factor of the quantum instruction set based on the quantum algorithm type; ranking a plurality of candidate quantum computing systems based on the optimization factor and metadata associated with the plurality of candidate quantum computing systems, the metadata descriptive of performance characteristics of the plurality of candidate quantum computing systems respective to the optimization factor; and scheduling the quantum instruction set on a selected quantum computing system of the plurality of candidate quantum computing systems based on ranking the plurality of candidate quantum computing systems.

The method may further comprise: comparing known parameters of the selected quantum computing system to the quantum instruction set to identify a gate error related to the selected quantum computing system in the quantum instruction set; and modifying the quantum instruction set to correct the gate error in the quantum instruction set.

The known parameters of the selected quantum computing system may comprise at least one of: a number of qubits of the selected quantum computing system; an error correction code of the selected quantum computing system; a gate ordering of the selected quantum computing system; or supported gate operations of the selected quantum computing system.

The gate error may comprise at least one of an uninitialized qubit error, an unused qubit error, a measurement sequence error, a qubit state preparation error, a qubit ordering error, an unsupported gate error, or an incorrect gate error.

Modifying the quantum instruction set to correct the gate error may comprise at least one of: replacing an unsupported gate operation of the quantum instruction set with a supported gate operation of the selected quantum computing system; converting a first gate ordering of the quantum instruction set to a second gate ordering of the selected quantum computing system; modifying a state preparation operation of the quantum instruction set; removing instructions associated with an unused qubit; adding an initialization instruction associated with an uninitialized qubit; or modifying a qubit allocation of the quantum instruction set.

The method may further comprise: displaying a visualization of the gate error related to the selected quantum computing system.

The optimization factor may comprise at least one of reliability, error rate, temperature, or speed.

Evaluating the optimization factor of the quantum instruction set based on the quantum algorithm type may comprise selecting the optimization factor to prioritize over a plurality of additional optimization factors based on a prioritized optimization factor associated with the quantum algorithm type.

The metadata descriptive of performance characteristics of the plurality of candidate quantum computing systems respective to the optimization factor may comprise empirical performance data from historical performance of quantum algorithms on the plurality of candidate quantum computing systems.

The metadata descriptive of performance characteristics of the plurality of candidate quantum computing systems may further be respective to quantum algorithm type.

Ranking the plurality of candidate quantum computing systems based on the optimization factor and the metadata associated with the plurality of candidate quantum computing systems may comprise: evaluating a plurality of algorithmic suitability scores respective to the plurality of candidate quantum computing systems based on the metadata descriptive of performance characteristics of the plurality of candidate quantum computing systems respective to the optimization factor; and ranking the plurality of candidate quantum computing systems based on the plurality of algorithmic suitability scores respective to the plurality of candidate quantum computing systems.

Evaluating the plurality of algorithm suitability scores respective to the plurality of candidate quantum computing systems may comprise comparing a capability requirement of the quantum instruction set to respective capabilities of the plurality of candidate quantum computing systems.

Evaluating the plurality of algorithm suitability scores respective to the plurality of candidate quantum computing systems may further be based on a complexity associated with the quantum algorithm type.

Evaluating the plurality of algorithm suitability scores respective to the plurality of candidate quantum computing systems may further be based on a risk rule or a quality rule.

The quantum instruction set may comprise a quantum assembly language (QASM) file.

According to a second aspect of the present disclosure there is provided a computing device comprising: one or more processor devices configured to carry out the method of the first aspect. The processor devices are configured to: obtain a quantum instruction set; classify a quantum algorithm type of the quantum instruction set; evaluate an optimization factor of the quantum instruction set based on the quantum algorithm type; rank a plurality of candidate quantum computing systems based on the optimization factor and metadata associated with the plurality of candidate quantum computing systems, the metadata descriptive of performance characteristics of the plurality of candidate quantum computing systems respective to the optimization factor; and schedule the quantum instruction set on a selected quantum computing system of the plurality of candidate quantum computing systems based on ranking the plurality of candidate quantum computing systems.

The one or more processor devices may further be configured to: compare known parameters of the selected quantum computing system to the quantum instruction set to identify gate error related to the selected quantum computing system in the quantum instruction set; and modify the quantum instruction set to correct the gate error in the quantum instruction set.

The known parameters of the selected quantum computing system may comprise at least one of: a number of qubits of the selected quantum computing system; an error correction code of the selected quantum computing system; a gate ordering of the selected quantum computing system; or supported gate operations of the selected quantum computing system.

The gate error may comprise at least one of an uninitialized qubit error, an unused qubit error, a measurement sequence error, a qubit state preparation error, a qubit ordering error, an unsupported gate error, or an incorrect gate error.

Modifying the quantum instruction set to correct the gate error may comprise at least one of: replacing an unsupported gate operation of the quantum instruction set with a supported gate operation of the selected quantum computing system; converting a first gate ordering of the quantum instruction set to a second gate ordering of the selected quantum computing system; modifying a state preparation operation of the quantum instruction set; removing instructions associated with an unused qubit; adding an initialization instruction associated with an uninitialized qubit; or modifying a qubit allocation of the quantum instruction set.

The one or more processor devices may further be configured to: display a visualization of the gate error related to the selected quantum computing system.

The optimization factor may comprise at least one of reliability, error rate, temperature, or speed.

Evaluating the optimization factor of the quantum instruction set based on the quantum algorithm type may comprise selecting the optimization factor to prioritize over a plurality of additional optimization factors based on a prioritized optimization factor associated with the quantum algorithm type.

The metadata descriptive of performance characteristics of the plurality of candidate quantum computing systems respective to the optimization factor may comprise empirical performance data from historical performance of quantum algorithms on the plurality of candidate quantum computing systems.

The metadata descriptive of performance characteristics of the plurality of candidate quantum computing systems may further be respective to quantum algorithm type.

Ranking the plurality of candidate quantum computing systems based on the optimization factor and the metadata associated with the plurality of candidate quantum computing systems may comprise: evaluating a plurality of algorithmic suitability scores respective to the plurality of candidate quantum computing systems based on the metadata descriptive of performance characteristics of the plurality of candidate quantum computing systems respective to the optimization factor; and ranking the plurality of candidate quantum computing systems based on the plurality of algorithmic suitability scores respective to the plurality of candidate quantum computing systems.

Evaluating the plurality of algorithm suitability scores respective to the plurality of candidate quantum computing systems may comprise comparing a capability requirement of the quantum instruction set to respective capabilities of the plurality of candidate quantum computing systems.

Evaluating the plurality of algorithm suitability scores respective to the plurality of candidate quantum computing systems may further be based on a complexity associated with the quantum algorithm type.

Evaluating the plurality of algorithm suitability scores respective to the plurality of candidate quantum computing systems may further be based on a risk rule or a quality rule.

The quantum instruction set may comprise a quantum assembly language (QASM) file.

According to a third aspect of the present disclosure there is provided a non-transitory computer-readable storage medium that includes executable instructions to cause one or more processor devices to carry out the method of the first aspect. The instructions cause the one or more processor devices to: obtain a quantum instruction set; classify a quantum algorithm type of the quantum instruction set; evaluate an optimization factor of the quantum instruction set based on the quantum algorithm type; rank a plurality of candidate quantum computing systems based on the optimization factor and metadata associated with the plurality of candidate quantum computing systems, the metadata descriptive of performance characteristics of the plurality of candidate quantum computing systems respective to the optimization factor; and schedule the quantum instruction set on a selected quantum computing system of the plurality of candidate quantum computing systems based on ranking the plurality of candidate quantum computing systems.

The instructions may further configure the one or more processor devices to: compare known parameters of the selected quantum computing system to the quantum instruction set to identify gate error related to the selected quantum computing system in the quantum instruction set; and modify the quantum instruction set to correct the gate error in the quantum instruction set.

The known parameters of the selected quantum computing system may comprise at least one of: a number of qubits of the selected quantum computing system; an error correction code of the selected quantum computing system; a gate ordering of the selected quantum computing system; or supported gate operations of the selected quantum computing system.

The gate error may comprise at least one of an uninitialized qubit error, an unused qubit error, a measurement sequence error, a qubit state preparation error, a qubit ordering error, an unsupported gate error, or an incorrect gate error.

Modifying the quantum instruction set to correct the gate error may comprise at least one of: replacing an unsupported gate operation of the quantum instruction set with a supported gate operation of the selected quantum computing system; converting a first gate ordering of the quantum instruction set to a second gate ordering of the selected quantum computing system; modifying a state preparation operation of the quantum instruction set; removing instructions associated with an unused qubit; adding an initialization instruction associated with an uninitialized qubit; or modifying a qubit allocation of the quantum instruction set.

The instructions may further configure the one or more processor devices to: display a visualization of the gate error related to the selected quantum computing system.

The optimization factor may comprise at least one of reliability, error rate, temperature, or speed.

Evaluating the optimization factor of the quantum instruction set based on the quantum algorithm type may comprise selecting the optimization factor to prioritize over a plurality of additional optimization factors based on a prioritized optimization factor associated with the quantum algorithm type.

The metadata descriptive of performance characteristics of the plurality of candidate quantum computing systems respective to the optimization factor may comprise empirical performance data from historical performance of quantum algorithms on the plurality of candidate quantum computing systems.

The metadata descriptive of performance characteristics of the plurality of candidate quantum computing systems may further be respective to quantum algorithm type.

Ranking the plurality of candidate quantum computing systems based on the optimization factor and the metadata associated with the plurality of candidate quantum computing systems may comprise: evaluating a plurality of algorithmic suitability scores respective to the plurality of candidate quantum computing systems based on the metadata descriptive of performance characteristics of the plurality of candidate quantum computing systems respective to the optimization factor; and ranking the plurality of candidate quantum computing systems based on the plurality of algorithmic suitability scores respective to the plurality of candidate quantum computing systems.

Evaluating the plurality of algorithm suitability scores respective to the plurality of candidate quantum computing systems may comprise comparing a capability requirement of the quantum instruction set to respective capabilities of the plurality of candidate quantum computing systems.

Evaluating the plurality of algorithm suitability scores respective to the plurality of candidate quantum computing systems may further be based on a complexity associated with the quantum algorithm type.

Evaluating the plurality of algorithm suitability scores respective to the plurality of candidate quantum computing systems may further be based on a risk rule or a quality rule.

The quantum instruction set may comprise a quantum assembly language (QASM) file.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
FIG. 1 is a block diagram of a computing system according to one implementation.
FIG. 2 is a diagram depicting a process for scheduling quantum instruction sets according to one implementation.
FIG. 3 is a flowchart of a method for scheduling quantum instruction sets according to one implementation.
FIG. 4 is a simplified diagram of a quantum system according to one implementation.
FIG. 5 is a block diagram of a computing device suitable for implementing examples according to one implementation.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples and claims are not limited to any particular sequence or order of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Quantum computing involves the use of quantum bits, referred to herein as "qubits," which have characteristics that differ from those of classical (i.e., non-quantum) bits used in classical computing. Qubits may be employed by quantum services that are executed by quantum computing devices.

Quantum instruction sets, such as Quantum Assembly (QASM) files, are used to describe a service as sets of instructions that will be executed within a quantum device. Quantum instruction sets such as QASM files often include qubit reservations, qubit manipulations, gate manipulations, or the like. Classical computing systems and/or quantum computing systems generally need some way to manage multiple requests to utilize quantum computing systems, such as by simultaneous execution or a queue. For instance, it can be desirable to schedule an incoming quantum instruction set among a plurality of quantum computing systems and/or a plurality of other quantum instruction sets to facilitate orderly and optimized execution of the plurality of quantum instruction sets.

The examples herein disclose systems and methods for scheduling a quantum instruction set on a selected quantum computing system of a plurality of candidate quantum computing systems based on an optimization factor associated with the quantum instruction set and metadata descriptive of performance characteristics of the candidate quantum computing systems. For instance, the optimization factor can be selected based on a classification of the quantum instruction set respective to type (or types) of high-level quantum algorithm(s) included within the quantum instruction set. As one example, based on the classified type of quantum algorithm in a quantum instruction set, the systems and methods herein can identify which optimization factor(s) is/are relatively more important for high-performance implementation of the quantum instruction set. The systems and methods herein can rank the candidate quantum computing systems based on the metadata indicative of performance of the candidate quantum computing systems relative to the optimization factors. The metadata can be learned from past algorithms implemented on the candidate quantum computing systems.

For example, if a quantum instruction set includes a particular quantum algorithm that is best optimized for speed over, for example, error rate or temperature, the systems and methods herein could schedule the quantum instruction set on a candidate quantum computing system with metadata indicating that the system performs highly for speed-sensitive algorithms. The systems and methods herein may prioritize this quantum computing system over, for example, other quantum computing systems that are available to schedule a quantum instruction set on, which may perform better for more error-sensitive applications or temperature-sensitive applications. As another example, if a scheduler receives an additional quantum instruction set that has a different optimization factor, such as error rate, the scheduler can schedule the additional quantum instruction set on a quantum computing system having metadata indicating that the quantum computing system has, for example, a stronger error correction capability or more error-resistant qubits.

The present disclosure provides a number of technical effects and benefits, including improvements to computing technology. For instance, systems and methods according to example implementations of the present disclosure can provide for ranking a plurality of candidate quantum computing systems based on an optimization factor selected according to a type of quantum algorithm in a quantum instruction set to be executed on the candidate quantum computing systems and metadata descriptive of performance characteristics of the candidate quantum computing systems respective to the optimization factor and schedule the quantum instruction set based on ranking the plurality of candidate quantum computing systems. Scheduling the quantum instruction set based on the ranking can provide for improved execution characteristics of the quantum instruction set. For example, the scheduling approaches described herein can optimize execution a quantum instruction set, and especially a plurality of incoming quantum instruction sets competing for limited quantum computing resources, based on the learned and/or historical performance of the quantum computing systems relative to similar quantum algorithms. This, in turn, can provide for fewer instances of quantum instruction sets needing to be reevaluated because of an error in execution that could have been avoided by utilizing a different quantum computing system.

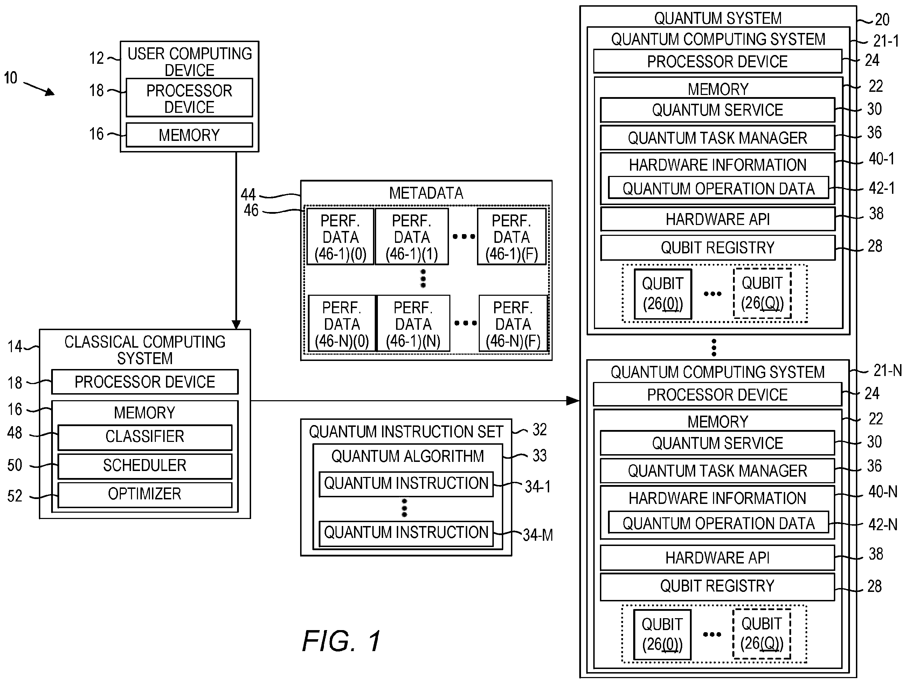

FIG. 1 is a block diagram of a computing system 10 according to one example. The computing system 10 includes a user computing device 12 and a classical computing system 14, which are classical computing devices including a memory 16 and a processor device 18. In certain implementations, the classical computing system 14 includes functionality provided by the user computing device 12. The computing system 10 includes a quantum system 20 with a plurality of quantum computing systems 21 -1 - 21-N (generally referred to as quantum computing systems 21) that each include a system memory 22 and a processor device 24. The quantum computing systems 21 may also be referred to as quantum machines 21 or quantum computing devices 21. The quantum computing systems 21 can be or can include, for example, the candidate quantum computing systems or selected quantum computing system referred to herein.

The user computing device 12, the classical computing system 14, and/or the quantum system 20 are all communicatively coupled via a classical communications link (not shown), which may include a private network or a public network such as the internet. It is to be understood that the computing system 10, according to some examples, may include other quantum computing systems and/or classical computing devices that are not illustrated in Figure 1. Additionally, the user computing device 12, the classical computing system 14, and/or the quantum system 20 in some examples may include constituent elements in addition to those illustrated.

In the example of Figure 1, each quantum computing system 21 implements a set of one or more qubits 26(0)-26(Q) (referred to generally as qubits 26) for use by quantum services executed by the quantum computing system 21. To maintain information for the qubit(s) 26, the quantum computing systems 21 may each include a qubit registry 28, which includes a plurality of qubit registry entries, each corresponding to a qubit such as the one or more qubits 26. The qubit registry 28 maintains and provides access to data relating to the qubits implemented by the quantum computing system 21, such as a count of the total number of qubits implemented by the quantum computing system 21 and a count of the number of available qubits that are currently available for allocation, as non-limiting examples. Each of the qubit registry entries of the qubit registry 28 also stores qubit metadata for a corresponding qubit 26. The qubit metadata may include, as non-limiting examples, an identifier of the corresponding qubit, an availability indicator that indicates whether the corresponding qubit is available for use or is in use by a specific quantum service, an identifier of a quantum service that is associated with the corresponding qubit or to which the corresponding qubit is allocated, and/or an entanglement indicator that indicates whether the corresponding qubit is in an entangled state.

The quantum computing system 21 executes one or more quantum services 30. The quantum service 30 is a process that executes on a quantum computing system 21 and employs qubits 26 to provide desired functionality. The quantum service 30 is defined using a quantum service definition, such as a quantum instruction set 32. The quantum instruction set 32 can define a quantum algorithm 33 including quantum instructions 34-1 to 34-N (collectively referred to as quantum instructions 34) that, when implemented by some or any of the quantum computing systems 21 (e.g., by the qubits 26), cause the quantum computing systems 21 to execute the quantum algorithm 33. For instance, the quantum instructions 34 can be or can include qubit configuration instructions, qubit initialization instructions, gate operations, measurement instructions, and other suitable instructions that cause the quantum computing systems 21 to perform operations on or using the qubits 26. The quantum instruction set 32 can be, for example, a Quantum Assembly Language (QASM) file. QASM is a programming language that specifies quantum circuits as input to a quantum computer by declaring classical bits and qubits and describing operations on the qubits and measurements needed to obtain a classical result based on the qubits.

Execution of quantum services 30 is facilitated by a quantum task manager 36, which handles operations for creating, monitoring, and terminating quantum services 30. The quantum task manager 36 may provide an interface (not shown) through which other services or tasks may request specific information regarding the qubits 26, the quantum service 30, and/or the quantum computing system 21. Additionally, information regarding the status and functionality of the quantum computing system 21 and the elements thereof may be made accessible to other processes via a hardware application programming interface (API) 38.

Each quantum computing system 21 includes a physical enclosure containing qubits 26. Further, each quantum computing system 21 includes hardware information 40-1 - 40-N (referred to generally as hardware information 40). Hardware information 40 may include load, operating temperature, noise, error rate, last time rebooted, hardware load, or the like. The hardware information 40 may be general or time-sensitive information. For example, the hardware information 40 may include load-based parameters, such as a low processing load threshold, a high processing load threshold, a low qubit usage threshold, a high qubit usage threshold, a low application queue threshold, a high application queue threshold, or the like. Hardware information 40 may include event-based parameters, such as low operating temperature threshold, high operating temperature threshold, or the like. Hardware information 40 may further include global operating parameters, such as a time, time period, processing load, available memory, count of executing processes, application queue, qubit usage, count of available qubits 26, and/or operating temperature, or the like. The hardware information 40 may include global operating conditions, such as system load, system response time, operating temperature, state of the qubits (e.g., qubit age, coherence time, and/or the like), or the like.

Accordingly, hardware information 40 may include quantum operation data 42-1 - 42-N (referred to generally as quantum operation data 42), such as historical quantum operation data or current quantum operation data. The quantum operation data 42 may include, for example, processing speed, temperature, noise, error rate, hardware load, resource utilization, and/or qubit availability, or the like. The historical quantum operation data may provide generalized information about the general historical performance of the quantum computing system 21, such as whether the quantum computing system 21 typically operates at a high temperature. The current quantum operation data may provide time sensitive information of the quantum computing system, such as whether the quantum computing system 21 is currently operating at a high temperature.

Qubits 26 generally require very specific environmental conditions for operation. Quantum runs can vary significantly depending on operating conditions of the quantum computing system 21, such as processing load, temperature variance, maintenance schedule, implementation strategy, qubit type, or the like. Furthermore, quantum computing systems 21 can behave with significant variation based on the types of algorithms performed during operation. For example, some quantum computing systems 21 can have variable performance relative to certain optimization factors such as, for example, temperature, error rate, error correction, and so on.

According to the examples of the present disclosure, the quantum system 20 can record, measure, aggregate, or otherwise generate metadata 44 based on the hardware information 40 and/or the quantum operation data 42 during execution of the quantum instruction set 32 and prior quantum instruction sets. The metadata 44 can be descriptive of performance characteristics of the quantum computing systems 21 respective to a particular optimization factor. For instance, the metadata 44 can include performance data 46 that is descriptive of performance characteristics respective to optimization factors and quantum computing systems 21. For example, performance data 46-1 (0) can describe performance characteristics of the quantum computing system 21-1 respective to a first optimization factor, performance data 46-1(1) can describe performance characteristics of the quantum computing system 21-1 respective to a second optimization factor, and so on. Similarly, performance data 46-N(0) can describe performance characteristics of the quantum computing system 21-N respective to the first optimization factor, performance data 46-N(1) can describe performance characteristics of the quantum computing system 21-N respective to the second optimization factor, and so on.

Generally, an optimization factor can describe some execution characteristic of a given quantum algorithm that can be measured, compared, and/or optimized for during execution of the quantum algorithm. Example optimization factors include, but are not limited to, reliability, error rate, temperature, or speed. Optimization factors may be evaluated relative to different quantum computing systems 21. For example, the performance characteristic data 46 may be a ranking, a score normalized relative to a baseline, or other relative identifier describing a relative quality of a particular quantum computing system 21 on a given optimization factor.

In some implementations, the performance data 46 can include empirical performance data from historical performance of quantum algorithms on the plurality of candidate quantum computing systems. For instance, the empirical values can be measured relative to a given optimization factor. The performance characteristic data 46 can include relative values or absolute or measured values. For example, performance characteristic data 46 relative to speed can include empirical values of speed characteristics such as "average execution time per instruction." As another example, performance characteristic data 46 relative to error rates can include empirical values of error characteristics such as "average errors per qubit."

In some implementations, in addition to and/or alternatively to being respective to optimization factors, the metadata 44 descriptive of performance characteristics of the quantum computing systems 21 can be respective to quantum algorithm type. For example, sets of quantum operations can define high-level types of quantum algorithms based on the inputs to the quantum system, the manner in which manipulations of those inputs are performed, and/or the desired output of the quantum system in response to performing the quantum operations. Example quantum algorithm types include, but are not limited to, "Grover's algorithm," "Shor's algorithm," "quantum annealing," "quantum Fourier transform," "quantum phase estimation," and several others. It should be understood that the quantum algorithm type may be dependent on, but is not necessarily uniquely associated with, an exact sequence of quantum instructions 34 in a quantum instruction set 32. For instance, multiple unique quantum instruction sets 32 could share common quantum algorithm types. These quantum instructions sets may differ in a manner that does not affect the type of quantum algorithm, such as, for example, syntax, qubit allocation, or other suitable factors.

According to example aspects of the present disclosure, the system 10 can provide for scheduling the quantum instruction set 32 on a selected quantum computing system 21 of the plurality of quantum computing systems 21 based on a ranking of the quantum computing systems respective to an optimization factor. For instance, the system 10 can obtain the quantum instruction set 32. The quantum instruction set 32 may be obtained, for example, from the user computing device 12.

The system 10 can classify a quantum algorithm type of the quantum instruction set 32. For instance, the classical computing system 14 can include a classifier 48 configured to classify the quantum instruction set 32 based on a type (or types) of the quantum algorithm 33. In examples where the quantum instruction set 32 includes a plurality of quantum algorithms, the classifier 48 can output multiple classifications of the quantum instruction set 32. The classifier 48 can output its classification in any suitable format. As one example, the classifier 48 can output a classification vector that includes a plurality of fields respective to a plurality of possible classifications, where values of the plurality of fields indicate whether the quantum algorithm 33 is classified according to each plurality of possible classifications. In some implementations, the values of the plurality of the fields can be binary. For example, the value respective to a particular quantum algorithm type can be a first value (e.g., zero) if the quantum algorithm 33 is not classified according to the particular quantum algorithm type and/or a second value (e.g., one) if the quantum algorithm 33 is classified according to the particular quantum algorithm type. Additionally and/or alternatively, in some implementations, the values of the field can correspond to a number of quantum algorithms 33 of a particular quantum algorithm type in the quantum instruction set 32. For example, if the quantum instruction set 32 includes two instances of applying a quantum Fourier transform algorithm, the value of the classification vector field corresponding to the quantum Fourier transform algorithm could be two (or other value reflective of two instances of the respective algorithm).

The classical computing system 14 can further include a scheduler 50. The scheduler 50 can schedule the quantum instruction set 32 among the quantum computing systems 21 based on optimization factors associated with the quantum algorithm(s) 33 in the quantum instruction set 32. For instance, the classical computing system 14 can evaluate an optimization factor of the quantum instruction set 32 based on the quantum algorithm type.

As one example, evaluating the optimization factor can include determining or selecting which of a plurality of candidate optimization factors is/are relatively more important to high quality performance of the quantum instruction set. In some implementations, evaluating the optimization factor of the quantum instruction set 32 based on the quantum algorithm type can include selecting the optimization factor to prioritize over a plurality of additional optimization factors based on a prioritized optimization factor associated with the quantum algorithm type. In some implementations, the classical computing system 14 can store (e.g., in memory 16) or otherwise access prioritization data describing a relationship between quantum algorithm types and prioritized optimization factors respective to the quantum algorithm types. The classical computing system 14 can use the quantum algorithm type of the quantum instruction set 32 to determine which prioritized optimization factor corresponds to the quantum instruction set 32.

Furthermore, in some implementations, such as implementations where the quantum algorithm type is or includes a classification vector with values of fields corresponding to a number of quantum algorithms 33 respective to the quantum algorithm types in the quantum instruction set 32, evaluating the optimization factor of the quantum instruction set can include determining an optimization factor to prioritize over additional optimization factors based on an analysis of the values of fields in the classification vector. For example, in some implementations, each quantum algorithm type may have an associated ranking or prioritization of optimization factors. A ranking of optimization factors can be generated by weighting the associated ranking respective to each quantum algorithm type based on the values of the fields (e.g., based on the number of times each type of quantum algorithm 33 appears in the quantum instruction set).

As one example, the prioritization data stored by classical computing system 14 can include a plurality of rankings assigned to each optimization factor and respective to each quantum algorithm type. For example, the optimization factors such as "speed," "temperature," "error rate," etc. can be ranked from first to last for each quantum algorithm type. Each ranking can be associated with a value or score. For example, the first ranking may be associated with a first (e.g., highest) score, the second ranking may be associated with a second score, and so on. To rank the optimization factors, the scores for each optimization factor can be aggregated respective to each quantum algorithm type. For instance, an aggregated prioritization score respective to each quantum algorithm type can be determined based on respective values of the classification vector respective to each quantum algorithm type and respective values of rankings assigned to each optimization factor. The rankings can additionally be respective to each quantum algorithm type. The plurality of optimization factors can be ranked based on the aggregated prioritization scores respective to each optimization factor. The optimization factor having a highest aggregated prioritization score can be used to select the quantum computing system 21, as described further below. Although discussed with reference to a single optimization factor, it should be understood that a plurality of optimization factors (e.g., the N highest ranking optimization factors) can be used to rank and select the quantum computing systems 21 as described below.

For example, if "speed" is ranked first for a particular quantum algorithm type, and "temperature" is ranked second for the particular quantum algorithm type, and the value of the classification vector respective to the particular quantum algorithm type is two (e.g., if two quantum algorithms 33 having the particular quantum algorithm type appear in the quantum instruction set 32), the aggregated prioritization score for "speed" can include two of the first value and the aggregated prioritization score for "temperature" can include two of the second value. Still further, if a quantum algorithm 33 having a second quantum algorithm type appears once in the quantum instruction set 32 where "speed" is ranked fourth among the optimization factors for the second quantum algorithm type and "temperature" is ranked first for the second quantum type, the aggregated prioritization score for "speed" can include two of the first value and one of the fourth value, and the aggregated prioritization score for "temperature" can include one of the first value and two of the second values. The first value, second value, etc. may not necessarily correspond directly to integers, although such an implementation is contemplated as within the scope of the present disclosure.

The classical computing system 14 (e.g., the scheduler 50) can rank the quantum computing systems 21 based on the optimization factor and the metadata 44 associated with the candidate quantum computing systems 21. For instance, as discussed above, the metadata 44 can be descriptive of performance characteristics of the plurality of quantum computing systems 21 respective to the optimization factor. As an example, the classical computing system 14 (e.g., the scheduler 50) can compare the performance data 46 respective to the optimization factor for each quantum computing system 21 to identify a quantum computing system 21 with the best performance respective to the desired optimization factor.

As one example, in some implementations, ranking the plurality of quantum computing systems 21 based on the optimization factor and the metadata 44 associated with the candidate quantum computing system can include evaluating a plurality of algorithmic suitability scores respective to the plurality of quantum computing systems 21. For instance, the classical computing system 14 (e.g., the scheduler 50) can evaluate or determine an algorithmic suitability score respective to each of the quantum computing systems 21 that is indicative of how suited the quantum computing system 21 is to execute the quantum instruction set 32 (e.g., the quantum algorithm 33). The algorithmic suitability score can be based on the metadata 44 describing performance characteristics of the plurality of quantum computing systems respective to the optimization factor and/or the quantum algorithm type. The algorithmic suitability score can be determined in any of a variety of approaches. As one example, the algorithmic suitability score can be derived from the values of the performance data 46 respective to the optimization factor that is being optimized for. For instance, the algorithmic suitability score can be equal to the performance data 46 and/or can be aggregated from the performance data 46 and/or additional data, such as the performance data 46 respective to other optimization factors.

In some implementations, evaluating the plurality of algorithm suitability scores respective to the plurality of quantum computing systems 21 can include comparing a capability requirement of the quantum instruction set 32 to respective capabilities of the plurality of quantum computing systems 21. For example, the quantum instruction set 32 can define certain capability requirements to be executed. The capability requirements may be defined explicitly within the quantum instruction set 32. Additionally or alternatively, the capability requirements may be implicit to the quantum instruction set 32. As one example, the quantum instruction set 32 may require a certain number of qubits 26 to be executed. The number of qubits 26 may be defined based on a number of qubit allocation instructions in the quantum instruction set 32 and/or a parameter of the quantum instruction set 32 indicative of the number of qubits utilized by the quantum instruction set 32.

The algorithmic suitability scores can be adjusted based on the comparison between the capability requirements of the quantum instruction set 32 and the respective capabilities of the plurality of quantum computing systems 21. For instance, in some implementations, an algorithmic suitability score of a particular quantum computing system 21 can be penalized (e.g., reduced) if the comparison indicates that the capability requirements of the quantum instruction set 32 are not met or satisfied by the capability of the particular quantum computing system 21. For instance, if a capability of a quantum computing system 21 is less than a capability requirement of the quantum instruction set 32, the comparison may indicate that the capability requirements are not satisfied. In some implementations, if the capability requirements are not satisfied, the quantum computing system 21 may be removed from consideration (e.g., by assigning a zero-valued or minimum-valued algorithmic suitability score). As another example, in some implementations, the algorithmic suitability score can be rewarded (e.g., increased) if the comparison indicates that the capability of the particular quantum computing system satisfies the capability requirements of the quantum instruction set 32. As yet another example, in some implementations, the algorithmic suitability score may be rewarded if a capability requirement of the quantum instruction set 32 exactly matches a capability of a quantum computing system 21. For example, an algorithmic suitability score for a quantum computing system 21 having the exact number of qubits 26 required by a quantum instruction set 32 may be rewarded.

In some implementations, evaluating the plurality of algorithm suitability scores respective to the plurality of quantum computing systems 21 can further be based on a complexity associated with the quantum algorithm type. For example, in some implementations, the classical computing system 14 can store (e.g., in memory 16) or otherwise access complexity data descriptive of complexities (e.g., complexity scores) respectively associated with each quantum algorithm type. The complexity may refer to, for example, an objective or quasi-objective measure of how complex, challenging, or difficult it can be for a quantum computing system 21 to perform a quantum algorithm 33. For example, a difficult quantum algorithm 33 requiring a variety of quantum instructions 34, having a high sensitivity to operational conditions of a quantum computing system 21 (e.g., temperature, error rate, etc.), requiring tight parallel processing of multiple qubits 26, or otherwise having some aspect that complicates execution of the quantum algorithm 33 may be assigned a high complexity. By comparison, a relatively fault-tolerant algorithm or an algorithm with few quantum instructions 34 may be assigned a low complexity. The complexity may be learned (e.g., through operation of the quantum system 20) and/or assigned by designers or operators of the quantum system 20 or another suitable entity.

The algorithmic suitability score can be determined based on the complexity (e.g., the complexity score). As one example, an algorithmic suitability score can be weighted based on the complexity. For example, a quantum instruction set 32 having a high complexity may require a more capable quantum computing system 21 to reliably execute. The scheduler 50 may elect to hold the quantum instruction set 32 until a later time if a quantum computing system 21 with a greater algorithmic suitability score will become available, even if a quantum computing system 21 that meets the capability requirements is of the quantum instruction set 32 is otherwise available. This can provide for an improved likelihood of successful execution, for example.

In some implementations, evaluating the plurality of algorithm suitability scores respective to the plurality of quantum computing systems 21 can further be based on a risk rule or a quality rule. A risk rule, for example, can define a capability or aspect of the quantum computing systems 21 that should or must be satisfied if the quantum instruction set 32 is to run on the quantum computing systems 21, such as for the purpose of mitigating risks associated with quantum computing. Additionally or alternatively, a quality rule can define a capability or aspect of the quantum computing systems 21 that should or must be satisfied if the quantum instruction set 32 is to run on the quantum computing systems 21, such as for the purpose of improving or ensuring the quality of the results produced by the quantum computing systems 21.

The classical computing system 14 (e.g., the scheduler 50) can rank the plurality of quantum computing systems 21 based on the plurality of algorithmic suitability scores respective to the plurality of quantum computing systems 21. For instance, the quantum computing systems 21 can be ranked based on the values of the algorithmic suitability scores in order of value, such as an ascending or descending order. The classical computing system 14 (e.g., the scheduler 50) can then select a quantum computing system 21 to schedule the quantum instruction set 32 on based on the ranking. For example, the highest ranking or best quantum computing system 21 can be selected to schedule the quantum instruction set 32 to execute on.

The scheduler 50 can then schedule the quantum instruction set on a selected quantum computing system 21 of the plurality of quantum computing systems 21 based on the ranking of the quantum computing systems 21. For instance, the scheduler 50 can provide the quantum instruction set 32 in a queue (e.g., a first-in-first-out (FIFO) queue) respective to the selected quantum computing system 21. The queue can, for example, include other quantum instruction sets that are scheduled for the selected quantum computing system 21. In some implementations, the scheduler 50 can additionally determine an order or time for scheduling the quantum instruction set 32. For example, in some implementations, a higher-priority quantum instruction set 32 may be scheduled nearer to the end of a queue than a lower-priority quantum instruction set 32. In some implementations, the priority of a quantum instruction set 32 may increase the longer it has been in the queue without being executed.

In some implementations, the scheduler 50 can account for additional information about the quantum computing systems 21 in selecting and/or scheduling the quantum instruction set 32. For example, in some implementations, the scheduler 50 can access information from the quantum task manager 36, the hardware API 38, the hardware information 40, and/or the quantum operation data 42 to utilize in scheduling the quantum instruction set 32. As one example, in some implementations, the scheduler 50 can account for a current workload on the quantum computing systems 21 in selecting the quantum computing system 21 to schedule the quantum instruction set 32. For example, the scheduler 50 may schedule a quantum instruction set 32 on a first quantum computing system 21 having a (e.g., slightly) lower algorithmic suitability score than a second quantum computing system 21 if a workload of the second quantum computing system 21 is higher than a workload of the first quantum computing system 21 to more effectively load-balance the quantum system 20. In making this determination, the scheduler 50 may, for example, consider whether the second quantum computing system 21 can nearly as effectively execute the quantum instruction set 32.

Furthermore, in some implementations, the classical computing system 14 can modify the quantum instruction set 32 to account for differences in the quantum computing systems 21. For instance, the quantum instruction set 32 may have been written for a particular quantum computing system 21. For example, the quantum instruction set 32 may have been written or designed to conform to syntax, gate ordering, gate availability, and other factors unique to a specific quantum computing system 21 of the quantum system. If the scheduler 50 instead schedules the quantum instruction set on another quantum computing system 21, the scheduled quantum computing system 21 may not share the exact factors of the original quantum computing system 21. For example, the scheduled quantum computing system 21 may use a different qubit ordering or utilize different gate operations. This can especially be challenging for lower-level quantum programming approaches, such as QASM.

In some implementations, the classical computing system 14 includes an optimizer 52 to receive and process the quantum instruction set 32 to account for differences between the quantum computing systems 21. The optimizer 52 requests hardware information 40, such as quantum operation data 42, from the hardware API 38 of each of the quantum computing systems 21. The optimizer 52 analyzes the hardware information 40 and/or quantum operation data 42 to optimize execution of the quantum instruction set 32 for a selected quantum computing system 21. In particular, the optimizer 52 modifies one or more quantum instructions 34 to avoid conflicts, conform to correct gate operation syntax, qubit ordering, and other capabilities of the selected quantum computing system 21, account for variations in the availability or naming of qubits 26, and/or otherwise improve execution of the quantum instruction set 32 on the selected quantum computing system 21.

For instance, in some implementations, the classical computing system (e.g., the optimizer 52) can be configured to compare known parameters of the selected quantum computing system 21 to the quantum instruction set 32 to identify a gate error related to the selected quantum computing system 21 in the quantum instruction set 32. The known parameters of a quantum computing system 21 can be, for example, the hardware information 40 and/or the quantum operation data 42, such as the information received via the hardware API 38. As an example, the known parameters of the selected quantum computing system can include at least one of: a number of qubits of the selected quantum computing system; an error correction code of the selected quantum computing system; a gate ordering of the selected quantum computing system; and/or supported gate operations of the selected quantum computing system.

The gate error can occur when a quantum instruction 34 attempts to perform a gate operation that is not properly performable by the selected quantum computing system 21. As an example, a gate error can occur if a quantum instruction 34 or quantum instructions 34 attempt to perform a gate operation that is unsupported by the selected quantum computing system 21, if the quantum instructions 34 perform operations on qubits that are not properly initialized, and/or due to other errors in the quantum instruction set 32. Example gate errors include, but are not limited to, an uninitialized qubit error, an unused qubit error, a measurement sequence error, a qubit state preparation error, a qubit ordering error, an unsupported gate error, and/or an incorrect gate error.

The classical computing system 14 (e.g., the optimizer 52) can modify the quantum instruction set 32 to correct the gate error in the quantum instruction set 32. For instance, the optimizer can replace quantum instruction(s) 34 in the quantum instruction set 32 that contribute to the gate error with corrected instructions 34. For instance, modifying the quantum instruction set 32 to correct the gate error can include at least one of: replacing an unsupported gate operation of the quantum instruction set 32 with a supported gate operation of the selected quantum computing system 21; converting a first gate ordering of the quantum instruction set 32 to a second gate ordering of the selected quantum computing system 21; modifying a state preparation operation of the quantum instruction set 32; removing instructions associated with an unused qubit; adding an initialization instruction associated with an uninitialized qubit; and/or modifying a qubit allocation of the quantum instruction set 32.

For example, in certain implementations, the optimizer 52 may receive a quantum instruction set 32 including quantum instructions that reserves qubits 1, 2, and 3 and perform further operations respective to qubits 1, 2, and 3. The quantum instruction set 32 could have been written for a first quantum computing system 21. However, the scheduler 50 may have queued the quantum instruction set 32 for a second quantum computing system 21 due to, for example, a higher algorithmic suitability score at the second quantum computing system 21. The second quantum computing system 21 may have a different gate order than the first quantum computing system 21. For example, the qubits 1, 2, and 3 of the first quantum computing system 21 may correspond to qubits 3, 2, and 1, respectively, of the second quantum computing system 21.

The optimizer 52 may then modify the quantum instructions 34 of the quantum instruction set 32 to cause operations intended for qubit 1 of the first quantum computing system 21 to instead be performed on qubit 3 of the second quantum computing system 21, and operations intended for qubit 3 of the first quantum computing system 21 to instead be performed on qubit 1 of the second quantum computing system 21. As another example, the optimizer 52 may replace a quantum instruction 34 that attempts to perform a gate operation not supported on the second quantum computing system 21 with an equivalent instruction or instructions that are supported on the second quantum computing system 21.

In some implementations, when a gate error is present in the quantum instruction set 32, the classical computing system 14 and/or the user computing device 12 can display a visualization of the gate error related to the selected quantum computing system 21. For example, in some implementations, the user computing device 12 can implement a quantum development environment that provides for a user to design and communicate the quantum instruction set 32 to the classical computing system 14. The visualization of the gate error can include, for example, underlining, highlighting, or otherwise identifying quantum instructions 34 that contribute to the gate error. Additionally and/or alternatively, the visualization of the gate error can identify information about the gate error, such as the type of gate error, the reason for the gate error, the qubit(s) affected by the gate error, and so on.

The scheduler 50 may schedule executions of the quantum instruction set 32 in accordance with execution environment requirements in view of a current state of the quantum computing systems 21. Examples of the execution environment requirement(s) may include an error rate threshold, a channel load rate threshold for a quantum communication channel within the quantum system 20, a coherence time threshold for the quantum computer system and/or for each qubit provided by the quantum computer system, and a temperature threshold for a temperature of the quantum computer system, or the like.

It is noted that the optimization discussed above may be applied locally to a single quantum computing system 21 or globally across multiple quantum computing systems 21 in a quantum system 20. For example, in certain implementations, the optimizer 52 may be configured to take multiple quantum instruction sets 32, each with multiple quantum instructions 34, and modify the quantum instruction sets 32 for efficient distribution across multiple quantum computing systems 21 of a quantum system 20.

In certain implementations, the optimizer 52 is configured to account for qubit type and/or executing quantum computing system 21. For example, in certain implementations, the optimizer 52 determines the optimal qubit type but is agnostic to which quantum computing system 21 executes the quantum instruction set 32. In certain implementations, the optimizer 52 determines the optimal qubit type, and then, if there are multiple quantum computing systems 21 including the qubit type, the optimizer 52 further determines an optimal quantum computing system 21 of a plurality of quantum computing systems 21 to execute the quantum instruction set 32.

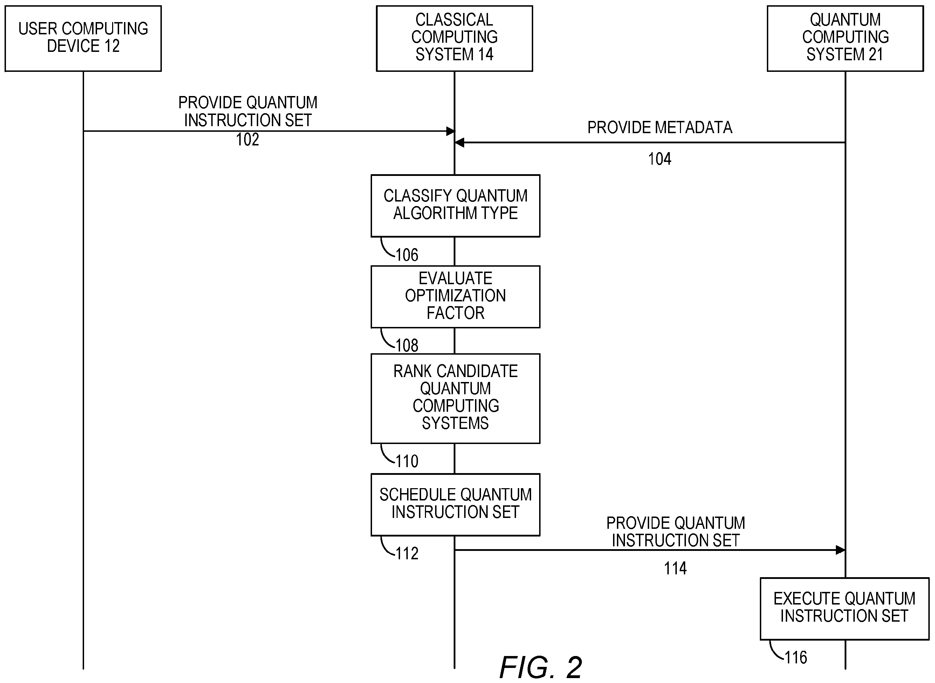

FIG. 2 is a diagram depicting a process for scheduling quantum instruction sets according to one implementation. The diagram depicts operations performed at and/or between the user computing device 12, the classical computing system 14, and/or the quantum computing system(s) 21 of FIG. 1. At 102, the user computing device 12 can provide a quantum instruction set (e.g., quantum instruction set 32 of FIG. 1) to the classical computing system 14. At 104, the quantum computing system(s) 21 can provide metadata descriptive of performance characteristics to the classical computing system 14 (e.g., by the hardware API(s) 38). At 106, the classical computing system 14 classifies a quantum algorithm type of the quantum instruction set 32. At 108, the classical computing system 14 evaluates an optimization factor of the quantum instruction set 32 based on the quantum algorithm type. At 110, the classical computing system 14 ranks a plurality of candidate quantum computing systems 21 based on the optimization factor and metadata 44 associated with the candidate quantum computing systems. At 112, the classical computing system 14 schedules the quantum instruction set 32 on a selected quantum computing system 21 of the plurality of candidate quantum computing systems 21 based on ranking the plurality of candidate quantum computing systems 21. At 114, the classical computing system 14 provides the quantum instruction set 32 to the selected quantum computing system 21. At 116, the selected quantum computing system 21 can execute the quantum instruction set 32. For instance, the selected quantum computing system 21 can perform one or more quantum operations based on the quantum instructions 34 in the quantum instruction set 32.

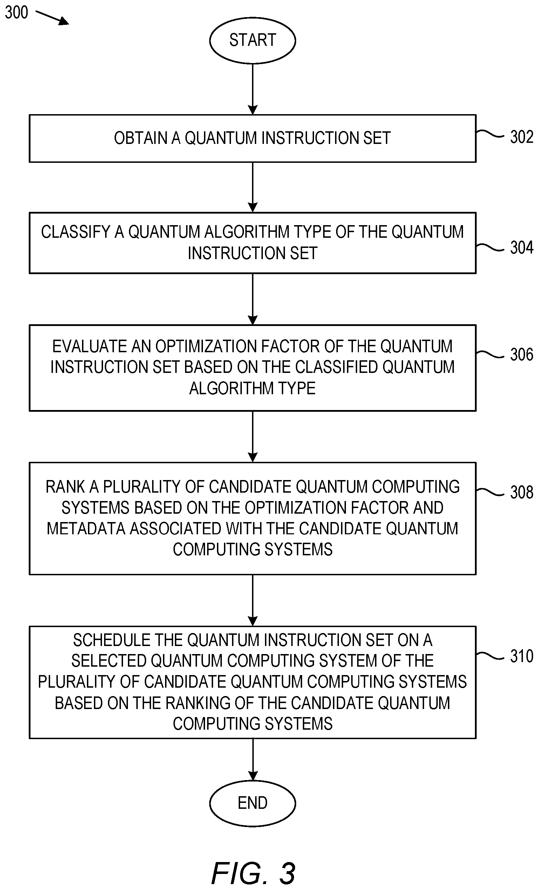

FIG. 3 is a flowchart of a method 300 for scheduling quantum instruction sets according to one implementation. FIG. 3 will be discussed in conjunction with Figure 1. At 302, the quantum system 20 obtains a quantum instruction set 32. At 304, the quantum system 20 classifies a quantum algorithm type of the quantum instruction set 32. At 306, the quantum system 20 evaluates an optimization factor of the quantum instruction set 32 based on the quantum algorithm type. At 308, the quantum system 20 ranks a plurality of candidate quantum computing systems 21 based on the optimization factor and metadata 44 associated with the candidate quantum computing systems. At 310, the quantum system 20 schedules the quantum instruction set 32 on a selected quantum computing system 21 of the plurality of candidate quantum computing systems 21 based on ranking the plurality of candidate quantum computing systems 21.

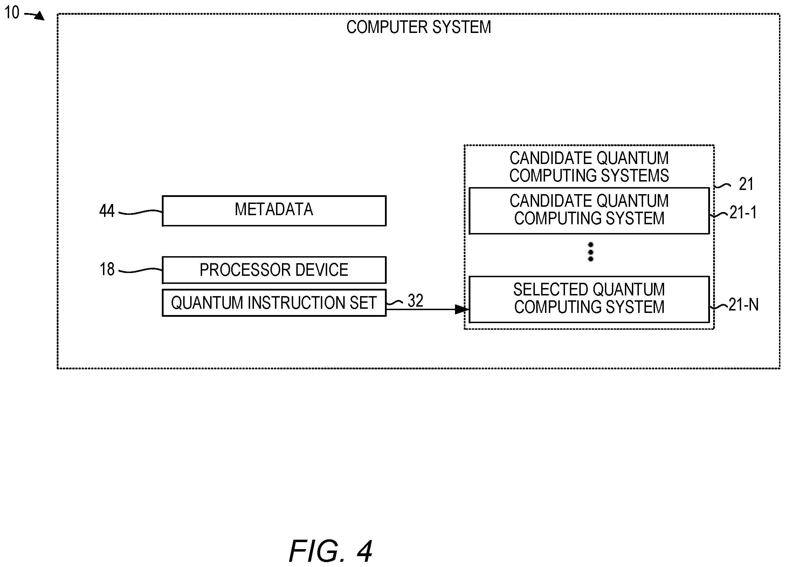

FIG. 4 is a simplified diagram of the computing system 10 illustrated in FIG. 1. The computer system 10 incudes the one or more processor devices 18 to obtain the quantum instruction set 32. The one or more processor devices 18 are further to classify the quantum algorithm type of the quantum instruction set 32. The one or more processor devices 18 are further to evaluate the optimization factor of the quantum instruction set based on the quantum algorithm type. The one or more processor devices 18 are further to rank a plurality of candidate quantum computing systems 21 based on the optimization factor and metadata 44 associated with the candidate quantum computing systems 21, the metadata 44 descriptive of performance characteristics of the plurality of candidate quantum computing systems 21 respective to the optimization factor. The one or more processor devices 18 are further to schedule the quantum instruction set 32 on a selected quantum computing system 21-N of the plurality of candidate quantum computing systems 21 based on ranking the plurality of candidate quantum computing systems 21.

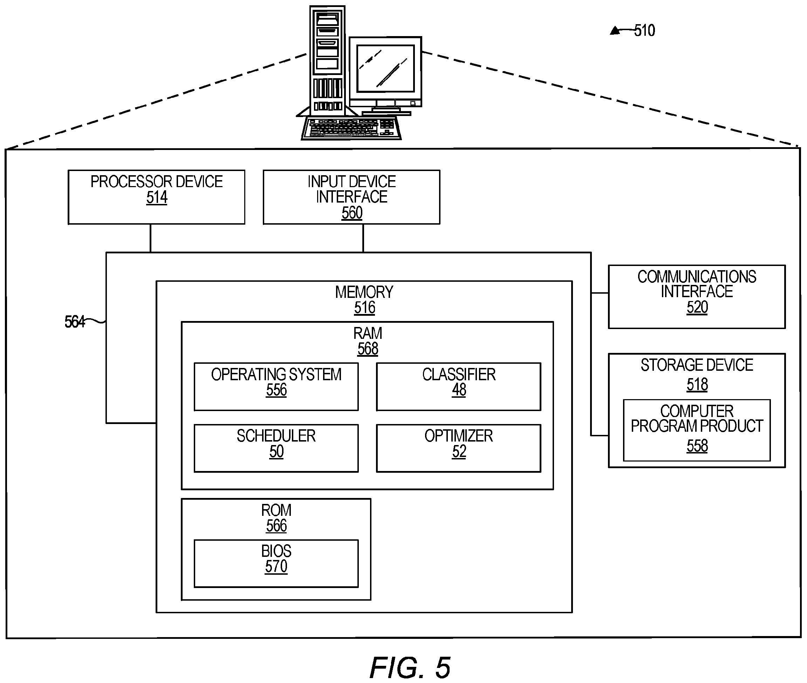

FIG. 5 is a block diagram of a computing device 510 suitable for implementing examples according to one example. The computing device 510 may comprise any computing or electronic device capable of including firmware, hardware, and/or executing software instructions to implement the functionality described herein, such as a computer server, a desktop computing device, a laptop computing device, a smartphone, a computing tablet, or the like. The computing device 510 includes the processor device 514, the system memory 516, and a system bus 564. The system bus 564 provides an interface for system components including, but not limited to, the system memory 516 and the processor device 514. The processor device 514 can be any commercially available or proprietary processor. The computing device 510 can, for example, be, be included in, and/or include the classical computing system 14 of FIG. 1.

The system bus 564 may be any of several types of bus structures that may further interconnect to a memory bus (with or without a memory controller), a peripheral bus, and/or a local bus using any of a variety of commercially available bus architectures. The system memory 16 may include non-volatile memory 566 (e.g., read-only memory (ROM), erasable programmable read-only memory (EPROM), electrically erasable programmable read-only memory (EEPROM), etc.), and volatile memory 568 (e.g., random-access memory (RAM)). A basic input/output system (BIOS) 570 may be stored in the non-volatile memory 566 and can include the basic routines that help to transfer information between elements within the computing device 150. The volatile memory 568 may also include a high-speed RAM, such as static RAM, for caching data.

The computing device 510 may further include or be coupled to a non-transitory computer-readable storage medium such as the storage device 518, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 518 and other drives associated with computer-readable media and computer-usable media may provide non-volatile storage of data, data structures, computer-executable instructions, and the like.

A number of modules can be stored in the storage device 518 and in the volatile memory 568, including, for example an operating system and one or more program modules, such as the classifier 48, scheduler 50, and/or optimizer 52 of FIG. 1, which may implement the functionality described herein in whole or in part. All or a portion of the examples may be implemented as a computer program product 558 stored on a transitory or non-transitory computer-usable or computer-readable storage medium, such as the storage device 518, which includes complex programming instructions, such as complex computer-readable program code, to cause the processor device 514 to carry out the steps described herein. Thus, the computer-readable program code can comprise software instructions for implementing the functionality of the examples described herein when executed on the processor device 514. The processor device 514, in conjunction with the program modules in the volatile memory 568, may serve as a controller, or control system, for the computing device 510 that is to implement the functionality described herein.

An operator, such as a user, may also be able to enter one or more configuration commands through a keyboard (not illustrated), a pointing device such as a mouse (not illustrated), or a touch-sensitive surface such as a display device. Such input devices may be connected to the processor device 514 through an input device interface 560 that is coupled to the system bus 64 but can be connected by other interfaces such as a parallel port, an Institute of Electrical and Electronic Engineers (IEEE) 1394 serial port, a Universal Serial Bus (USB) port, an IR interface, and the like. The computing device 510 may also include a communications interface 520, such as an Ethernet transceiver and/or a Wi-Fi transceiver, or the like, suitable for communicating with network(s) as appropriate or desired. The computing device 510 may also include a video port configured to interface with a display device to provide information to the user. For example, the display device can display the visualizations of gate errors described herein.

Individuals will recognize improvements and modifications to the preferred examples of the disclosure. All such improvements and modifications are considered within the scope of the concepts disclosed herein and the claims that follow.

## Claims

1. A method, comprising:
obtaining a quantum instruction set;
classifying a quantum algorithm type of the quantum instruction set;
evaluating an optimization factor of the quantum instruction set based on the quantum algorithm type;
ranking a plurality of candidate quantum computing systems based on the optimization factor and metadata associated with the plurality of candidate quantum computing systems, the metadata descriptive of performance characteristics of the plurality of candidate quantum computing systems respective to the optimization factor; and
scheduling the quantum instruction set on a selected quantum computing system of the plurality of candidate quantum computing systems based on ranking the plurality of candidate quantum computing systems.

2. The method of claim 1, further comprising:
comparing known parameters of the selected quantum computing system to the quantum instruction set to identify a gate error related to the selected quantum computing system in the quantum instruction set; and
modifying the quantum instruction set to correct the gate error in the quantum instruction set.

3. The method of claim 2, wherein the known parameters of the selected quantum computing system comprise at least one of:
a number of qubits of the selected quantum computing system;
an error correction code of the selected quantum computing system;
a gate ordering of the selected quantum computing system; or
supported gate operations of the selected quantum computing system.

4. The method of claim 2, wherein the gate error comprises at least one of an uninitialized qubit error, an unused qubit error, a measurement sequence error, a qubit state preparation error, a qubit ordering error, an unsupported gate error, or an incorrect gate error.

5. The method of claim 2, wherein modifying the quantum instruction set to correct the gate error comprises at least one of:
replacing an unsupported gate operation of the quantum instruction set with a supported gate operation of the selected quantum computing system;
converting a first gate ordering of the quantum instruction set to a second gate ordering of the selected quantum computing system;
modifying a state preparation operation of the quantum instruction set;
removing instructions associated with an unused qubit;
adding an initialization instruction associated with an uninitialized qubit; or
modifying a qubit allocation of the quantum instruction set.

6. The method of claim 2, further comprising displaying a visualization of the gate error related to the selected quantum computing system.

7. The method of claim 1, wherein the optimization factor comprises at least one of reliability, error rate, temperature, or speed.

8. The method of claim 1, wherein evaluating the optimization factor of the quantum instruction set based on the quantum algorithm type comprises selecting the optimization factor to prioritize over a plurality of additional optimization factors based on a prioritized optimization factor associated with the quantum algorithm type.

9. The method of claim 1, wherein the metadata descriptive of performance characteristics of the plurality of candidate quantum computing systems respective to the optimization factor comprises empirical performance data from historical performance of quantum algorithms on the plurality of candidate quantum computing systems.

10. The method of claim 1, wherein the metadata descriptive of performance characteristics of the plurality of candidate quantum computing systems is further respective to quantum algorithm type.

11. The method of claim 10, wherein ranking the plurality of candidate quantum computing systems based on the optimization factor and the metadata associated with the plurality of candidate quantum computing systems comprises:
evaluating a plurality of algorithmic suitability scores respective to the plurality of candidate quantum computing systems based on the metadata descriptive of performance characteristics of the plurality of candidate quantum computing systems respective to the optimization factor; and
ranking the plurality of candidate quantum computing systems based on the plurality of algorithmic suitability scores respective to the plurality of candidate quantum computing systems.

12. The method of claim 11, wherein:
evaluating the plurality of algorithm suitability scores respective to the plurality of candidate quantum computing systems comprises comparing a capability requirement of the quantum instruction set to respective capabilities of the plurality of candidate quantum computing systems;
optionally, evaluating the plurality of algorithm suitability scores respective to the plurality of candidate quantum computing systems is further based on a complexity associated with the quantum algorithm type; and
optionally, evaluating the plurality of algorithm suitability scores respective to the plurality of candidate quantum computing systems is further based on a risk rule or a quality rule.

13. The method of claim 1, wherein the quantum instruction set comprises a quantum assembly language (QASM) file.

14. A computer system, comprising one or more processor devices configured to perform the method of any of claims 1-13.

15. A non-transitory computer-readable storage medium that includes executable instructions to cause one or more processor devices to perform the method of any of claims 1-13.
